# EUROPEAN PATENT APPLICATION

(11) **EP 4 734 408 A1**
(43) Date of publication of application: **29.04.2026**
(21) Application number: 25208920.6
(22) Date of filing: 15.10.2025
(51) Int. Cl.: H04J 14/02

(54) **OPTICAL PROTECTION SWITCHING BASED ON INTRADYNE SIGNAL DETECTION**

(30) Priority: 18.10.2024 US 202463708830 P; 06.12.2024 US 202418971141
(71) Applicant: Cisco Technology, Inc., San Jose, CA 95134-1706 (US)
(72) Inventor: Tanzi, Alberto, San Jose, 95134-1706 (US); Brunella, Mauro, San Jose, 95134-1706 (US); Turukhin, Alexey, San Jose, 95134-1706 (US); Soskind, Michael, San Jose, 95134-1706 (US); Gonzales, Enrico Antonio, San Jose, 95134-1706 (US)
(74) Representative: Noble, Nicholas

(57) **Abstract**

Techniques for protection switching mechanisms that use detection of power in baseband signals resulting from optical mixing of an optical signal (at a frequency of a particular channel to be protected) with the received WDM spectra to determine whether there is a failure on the particular channel, indicated by an average power at a resulting baseband signal from the optical mixing being less than a threshold.

## Description

### CROSS REFERENCE TO RELATED APPLICATION

This application claims priority to U.S. Provisional Application No. 63/708,830, filed October 18, 2024, the entirety of which is incorporated herein by reference.

### TECHNICAL FIELD

The present disclosure relates to optical networks and communications.

### BACKGROUND

Optical protection switching is currently performed by sensing the signal optical power on the working and protection lines. This method works only in the case of a single optical channel, and cannot work in a Wavelength Division Multiplexing/Multiplexed (WDM) scenario where several optical channels are present at the same interface and the protection shall operate only on a specific channel wavelength. In this case, optical power sensing with a photodiode does not provide a reliable switching mechanism since the absence of a single channel out of N cannot be detected.

The capability to protect one specific channel within a WDM comb becomes extremely important with the introduction of coherent interfaces with their intrinsic capability to select the required channel within the WDM comb without the need of any optical filter.

New Reconfigurable Optical Add-Drop Multiplexer (ROADM) architectures are based on colorless/contentionless add/drop stages where multiple channels are always present on each termination port. These types of add/drop stages employ a protection switching unit (also called protection switching module) capable of detecting and automatically protecting from the failure of one given channel belonging to a WDM signal and not reacting in case of failure of other optical channels present at the same port.

### BRIEF DESCRIPTION OF THE DRAWINGS

FIG. 1A is a block diagram of an optical network in which an intradyne protection switch module (IPSM) according to the embodiments presented herein, may be deployed.
FIG. 1B is a block diagram depicting two IPSMs in communication with each other, according to an example embodiment.
FIG. 2 is a block diagram of an IPSM in which a local optical oscillator is provided in a receiver section, according to an example embodiment.
FIG. 3 is a block diagram of an IPSM in which an optical signal obtained from a transmitter section in the IPSM is tapped and use as a pseudo local oscillator signal in a receiver section of the IPSM, according to an example embodiment.
FIG. 4A is a schematic diagram of an intradyne detector used in the IPSM shown in FIGs. 2 and 3, according to an example embodiment.
FIG. 4B is a schematic diagram of a lock-in detection circuit, of a first type, for converting the output of an intradyne detector shown in FIG. 4A to baseband, according to an example embodiment.
FIG. 4C is a schematic diagram of a lock-in detection circuit, of a second type, for converting the output of an intradyne detector shown in FIG. 4A to baseband, according to an example embodiment.
FIGs. 5 - 7 are diagrams depicting operation of an IPSM according to example embodiments, also using the intradyne detector of FIGs. 4A - 4C.
FIG. 8 illustrates a flow chart depicting a method according to an example embodiment.
FIG. 9 is a block diagram of an optical device that may include the IPSM according to the embodiments presented herein.

### DESCRIPTION OF EXAMPLE EMBODIMENTS

### Overview

Presented herein are protection switching mechanisms that use detection of power in baseband signals resulting from optical mixing of an optical signal (at a wavelength of a particular channel to be protected) with the received wavelength division multiplexed (WDM) spectra to determine whether there is a failure on the particular channel, indicated by an average power at a resulting baseband signal from the optical mixing being less than a threshold.

In one form, a method is provided that is performed in an optical node for determining whether protection is to be triggered for a particular channel in a wavelength division multiplexed (WDM) optical spectra comprising a plurality of channels. The method involves optically mixing the WDM optical spectra with an optical signal at a wavelength of the particular channel to generate a baseband optical signal that is proportional to a power of the particular channel. The method further involves converting the baseband optical signal to a baseband electrical signal, comparing a level of the baseband electrical signal with a threshold, and applying protection to the particular channel of the WDM optical spectra based on comparison of the level of the baseband electrical signal with the threshold.

In another form, an optical device is provided. The optical device includes an optical transmitter section having an input port to receive optical signals to be transmitted to a remote optical device, and an optical receiver section having an input port to receive wavelength division multiplexed (WDM) optical spectra. The optical receiver section is configured to mix the WDM optical spectra with an optical signal at a wavelength of a particular channel to generate a baseband optical signal that is proportional to a power of the particular channel. The optical receiver section is further configured to convert the baseband optical signal to a baseband electrical signal, compare a level of the baseband electrical signal with a threshold to determine whether the particular channel is to be protected, and apply protection to the particular channel of the WDM optical spectra based on comparison of the level of the baseband electrical signal with the threshold.

### Example Embodiments

Techniques are presented herein to generate a detectable signal that can be used to trigger the protection only in the case of the failure of one specific channel in the WDM comb. The method is based on the "intradyne beat" between the aggregated WDM signal, composed by several optical channels, and one Local Oscillator (LO) tuned to the wavelength of the channel that needs to be protected.

This method generates an optical signal at baseband proportional to the power of the channel that has the same wavelength of the LO. The average power of this baseband optical signal can be "sensed" with a photodetector (PD) and can be used to detect the presence or absence of the specific channel that need to be protected. All the other channels in the WDM comb at wavelengths different than that of the LO are rejected by intradyne detection and do not contribute to baseband signal power.

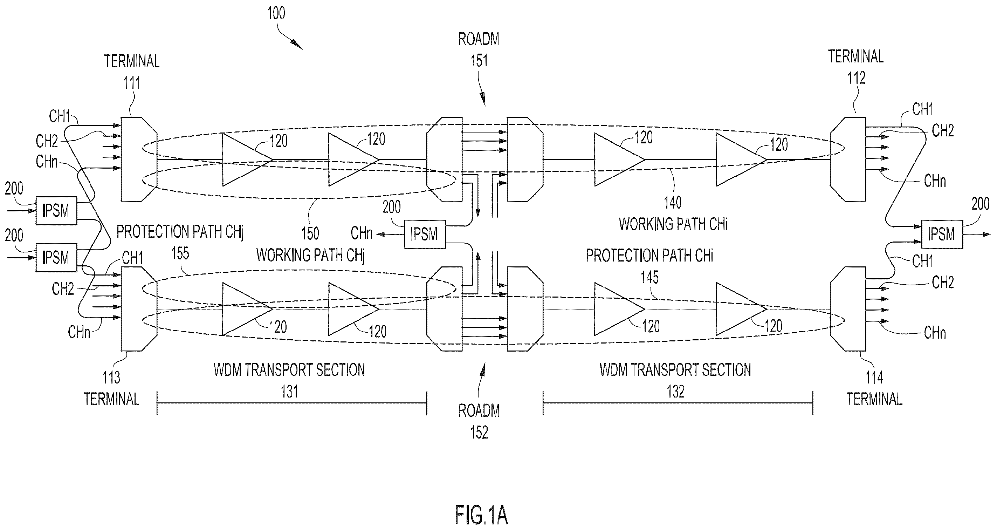

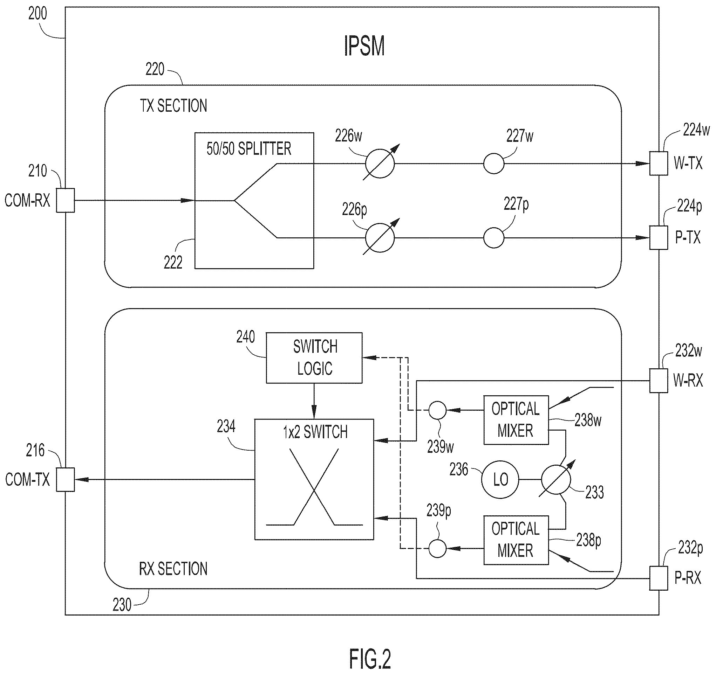

Reference is first made to FIG. 1A. FIG. 1A shows an optical network 100 including optical protection switching units or protection switching modules, or optical Intradyne PSMs (IPSMs) 200, according to an example embodiment. The IPSMs 200 may be PSMs that are configured for intradyne signal detection according to the various embodiments presented herein with respect to FIGs. 2, 3, 4A - 4C and 5 - 7. For simplicity, IPSMs 200 are also referred to a Intradyne PSMs. Optical network 100 includes a first terminal 111, one or more optical amplifiers 120, a first reconfigurable optical add-drop multiplexer, or first ROADM 151, a second terminal 112, a third terminal 113, a second ROADM 152, and a fourth terminal 114. In the example network of FIG. 1A, a CHᵢ working path 140 includes first terminal 111, first ROADM 151, and second terminal 112. A CHᵢ protection path includes third terminal 113, second ROADM 152, and fourth terminal 114. Similarly, a CHⱼ working path 150 includes first terminal 111 and first ROADM 151, and a CHⱼ protection path 155 includes third terminal 113 and second ROADM 152. The several components mentioned above and depicted in FIG. 1A are connected to one another via optical fibers, as shown.

In operation, and as an example, modulated optical signals for each of the plurality of WDM channels (CH₁, CH₂, ... CHₙ) are input to, e.g., first terminal 111 where they are multiplexed so that the signals are combined for transmission as a WDM signal. The one or more optical amplifiers 120 boost the WDM signal for transmission through the fiber link. At the other end of the link or path, in this case, second terminal 112, demultiplexes the WDM signal into respective channels for termination or further processing.

First ROADM 151 may also demultiplex the WDM signal and then add/drop selected channels in accordance with instructions from, e.g., a network operator.

Several optical protection switching modules, or optical IPSMs 200, are depicted in FIG. 1A. In the example shown, one set of optical IPSMs 200 is configured to monitor optical signals associated with CH₁ of the WDM signals being carried by the optical fibers. Other optical IPSMs 200 may be configured to monitor any given channel n. Optical IPSM 200 associated with first ROADM 151 and second ROADM 152 is depicted as protecting channel n. As will be clear from the following discussion, those skilled in the art will appreciate that optical IPSMs 200 may be configured to protect any given channel among WDM channels CH₁, CH₂, ... CHₙ.

A first WDM transport section 131 is defined as being between, e.g., first terminal 111 and first ROADM 151, or between third terminal 113 and second ROADM 152. A second WDM transport section 132 is defined as being between, e.g., first ROADM 151 and second terminal 112, or between second ROADM 152 and fourth terminal 114. Thus, CHᵢ working path 140 and CHᵢ protection path 145 are comprised of first WDM transport section 131 and second WDM transport section 132. CHⱼ working path 150 and CHⱼ protection path 155 are comprised of first WDM transport section 131.

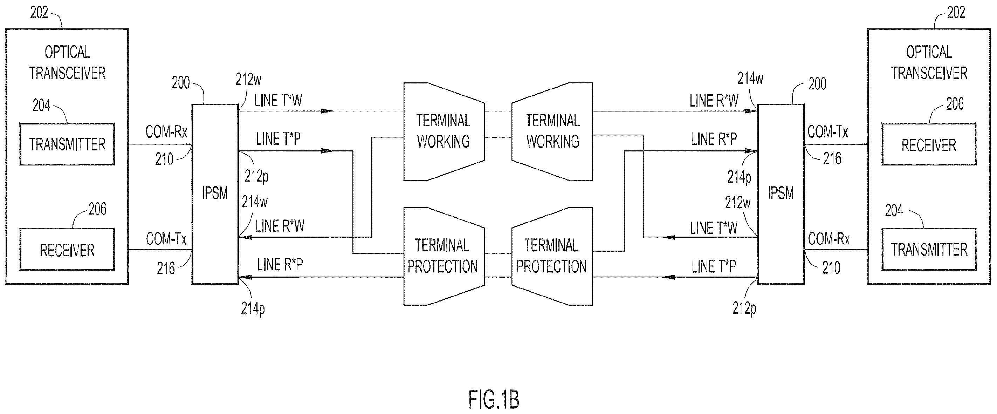

As shown, each optical IPSM 200 is deployed as an interface between a network component (e.g., second terminal 112) and the optical fiber of the optical network. As shown in FIG. 1B, the IPSM 200 is deployed between the Optical Interface, that is the optical transceiver that includes an optical transmitter and an optical receiver, terminating the channel to be protected and the Terminal (Terminal Working and Terminal Protection).

FIG. 1B illustrates how the IPSMs 200 provide for 1+1 protection for a fiber section with all of the optical fibers shown. This is only an example, and the protection could be more than 1+1. Since the protection is 1+1, there are four fibers in the fiber section, a transmitting fiber and its alternate, here labeled as Tx-W line and Tx-P line; and a receiving fiber and its alternate, labeled as RX-W line and RX-P line. By convention, W stands for Working and P stands for Protection. The IPSMs 200 sit as interfaces between a network component and the optical fibers which are connected to a remote optical protection module and its corresponding network component across the fiber section. That is, each IPSM 200 is connected to an optical transceiver 202 that includes a transmitter 204 and a receiver 206.

For Optical Transport System (OTS) protection, the IPSMs 200 are connected between each optical amplifier, the network components, and the section optical fibers as shown in FIG. 1B. For Optical Management System (OMS) protection, the IPSMs are positioned between the multiplexer or demultiplexer, the network components of terminal and ROADM sites which define the OMS, and the section optical fibers. The IPSM 200, with its intradyne detection mechanism, is specifically designed to operate at channel level (so called OCH protection). In principle it can be used in OTS or OMS protections but in this case the traditional failure detection based on power level is sufficient. The OCH protection operates "at transceiver level" so just after the optical interface (optical transceiver). With modern ROADM architectures the optical signal at the Terminal egress port is not filtered on a single wavelength but is composed of a WDM comb/spectra.

In operation, each IPSM 200 transmits signals received through its Com-RX port 210 (connected to the transmitter 204 of the optical transceiver 202) to both transmitting ports 212w and 212p for the working transmitting fiber Tx-W and for the protection transmitting fiber Tx-P respectively. The IPSM 200 receives signals through two input ports, 214w and 214p (connected to the working receiving fiber Rx-W and the protection receiving fiber Rx-P respectively) and passes the signals from one of these fibers to the Com-TX port 216 which in turn is connected to the receiver 206 of the optical transceiver 202. In normal operation signals on the working receiving fiber Rx-W are selected and upon detecting a fault in the working receiving fiber Rx-W, the IPSM 200 switches over to signals on the protection receiving fiber Rx-P to pass to the Com-TX port 216.

While normally transmitting duplicate signals on both the working transmitting fiber Tx-W and the protection transmitting fiber Tx-P, the IPSM 200 during management, testing, and maintenance operations may transmit signals on only one transmitting fiber and may be required to switch between the working transmitting fiber Tx-W and the protection transmitting fiber Tx-P. Some example management, testing and maintenance operations include a "lockout' of a switchover, i.e., the prevention of a switchover from one optical fiber to another; a "forced switchover, i.e., forcing a Switchover unless there is a lockout in operation; and a "manual Switchover, i.e., performing a Switchover unless there is a lockout or a forced Switchover already in operation.

A functional block diagram of an IPSM 200 is shown in FIG. 2. IPSM 200 comprises a transmitter (TX) section 220 and a receiver (RX) section 230. The TX section 220 includes an input Com-RX port 210 which receives signals to be transmitted from a network component to a corresponding remote network component across an optical fiber. The TX section 220 includes a 50/50 optical splitter 222 that splits incoming optical signals for a working transmitting fiber W-TX port 224w and for the protection transmitting fiber P-TX port 224p. Optionally, the power of each set of the split signals is controlled by a variable optical attenuator (VOA) 226w and 226p. The effectiveness of each of VOA 226w and VOA2 226p is monitored by a corresponding photodiode (or photodetector) 227w and 227p, respectively. The photodiodes 227w and 227p receive a small tapped off portion of the signals from the output of VOA 226w, VOA 226p, or directly after 50-50 splitter 222 (if VOA 226w and VOA 226p are not present). Photodiodes 227w and 227p are optional.

The RX section 230 includes two input ports, a working receiving W-RX port 232w and a protection receiving P-RX port 232p. A 1×2 optical switch 234 obtains the received signals from the W-RX port 232w and P-RX port 232p, received from a corresponding remote network component. The 1×2 optical switch 234 selects whether and which of the signals from W-RX port 232w or P-RX port 232p are to be passed to the output COM-TX port 216 and a corresponding optical network component.

The RX section 230 further includes a Tunable Laser source operating as a Local Oscillator (LO) 236, VOA 233, optical mixers 238w and 238p, and switch logic 240. The RX section 230 receives inbound WDM spectra present at W-RX port 232w and P-RX port 232p, split from the main paths before entering the optical switch 234. The inbound WDM spectra includes multiple traffic channels at different WDM wavelengths, and are mixed by the optical mixers 238w and 238p with the LO 236 tuned to a given optical frequency fLO =fCHn central frequency of a channel to be protected. VOA 233 is provided to avoid saturation issues associated with high LO or high RX power. It is to be understood that "optical frequency" and "wavelength" are used synonymously and interchangeably.

The "beating" between the local oscillator signal provided by the LO 236 and the WDM spectra generates baseband optical signals with average optical power proportional to the power at the channel CHn. The power of these baseband signals is sensed with the two photodetectors PD3 and PD4, one for each port. All the other channels at wavelengths different than the optical frequency of the LO (CHn) are rejected and do not provide a relevant contribution to the average optical power detected by photodetectors 239w and 239p. The electrical signals converted by 239w and 239p are provided to the switch logic 240 that manages the protection driving the 1×2 optical switch 234.

The optical signals provided to photodetectors 239w and 239p provide for a reliable method to detect a failure of the specific channel CHn at the ports W-RX and P-RX and they are insensitive to any other variations of the WDM channels at optical frequencies different than fLO so it may be used to trigger the protection switching. The switch logic 240 may be a digital signal processor, digital logic circuit, microprocessor, or any other suitable fixed or programmable logic circuit or device. The switch logic 240 evaluates an average power of the baseband electrical signal from output of the optical mixers 238w and 238p to determine the presence or absence of the particular channel that needs to be protected, and controls the optical switch 234 to select either the inbound spectra from the W-RX port 232w or the inbound WDM spectra from the P-RX port 232p for output to the COM-TX port 216. For example, the switch logic 240 may be configured to compare the power of the baseband electrical signal of the working path (from the W-RX port 232w) with a threshold, and when the threshold is not exceeded, then protection is triggered for the particular channel (the WDM spectra from P-RX port 232p is selected), and when the threshold is not exceeded, then protection is not triggered for the particular channel (the WDM spectra from W-RX port 232w is selected).

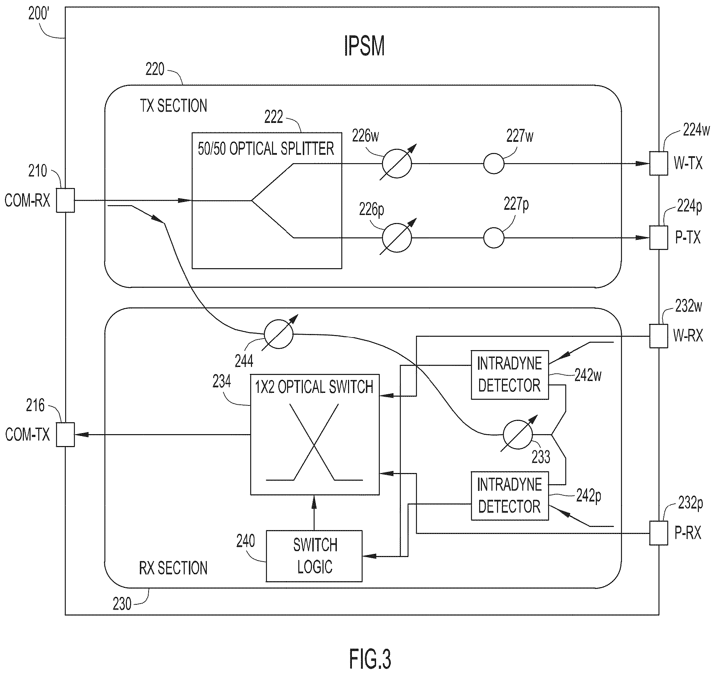

An alternative arrangement of an IPSM that simplifies the implementation and reduces cost, is shown in FIG. 3. The IPSM 200' is similar to the IPSM 200 of FIG. 2, except that instead of using a LO in the RX section 230, a replica of the channel (called a "pseudo-LO") is obtained from the TX section 220 and coupled to the RX section 230. That is, part of the signal entering the COM-RX port 210 of the TX section 220 is "tapped" and routed to two intradyne detectors 242w and 242p, via an optical VOA 244. In general, the optical signal entering the IPSM 200' at COM-RX port 210 is a single modulated optical channel because the aggregation in the WDM spectrum normally happens in subsequent stages of the system. Additionally, this channel always has the same central wavelength (optical frequency) as the channel that is transmitted that may involve protection in the RX section 230 (normally in coherent transmission, one optical channel is transmitted in both directions at the same frequency). In the arrangement that uses a pseudo-LO, the IPSM configuration is automatic since the transmitted tapped signal has the wavelength (optical frequency) of the channel that is to be protected.

The intradyne detectors 242w and 242p mix the inbound spectra at W-RX port 232w and the inbound spectra at P-RX port 232p, respectively, with the "pseudo-LO" optical signal obtained from the TX section 220. Again, the "pseudo-LO" is a replica of the transmitted channel in the opposite direction, "tapped" from the COM-RX port 210 of the TX section 220. The "pseudo-LO" from the TX port is at the same wavelength (optical frequency) of the channel to be selected from the WDM spectrum present at W-RX port 232w and P-RX port 232p. The pseudo-LO may be attenuated by VOA 233 if necessary for instances of high receive optical power from either P-RX or W-RX.

Each intradyne detector 242w and 242p selects only one channel out of N present channels in the spectra obtained at ports 232w and 232p, respectively, converting that channel into the baseband and detecting its average optical power. The switch logic 240 compares the detected average power of the specific channel with a threshold for controlling the optical switch 234 in a manner similar to that described in connection with FIG. 2.

It has been verified that the pseudo-LO, even if modulated, generates inside intradyne detectors a similar "beating" mechanism that brings a particular channel of the WDM comb, CHn, in the baseband and provides reliable monitor signals, similar to the arrangement of the IPSM 200 in FIG. 2.

While the term "intradyne" is used herein, it should be understood that the arrangement of FIG. 2 may also be referred to as a heterodyne detection arrangement, while the arrangements of FIG. 3 may be referred to as an intradyne detection arrangement. The functionality performed in these arrangements could be referred to with different terminology (heterodyne instead of intradyne or vice versa) by those with skill in the art.

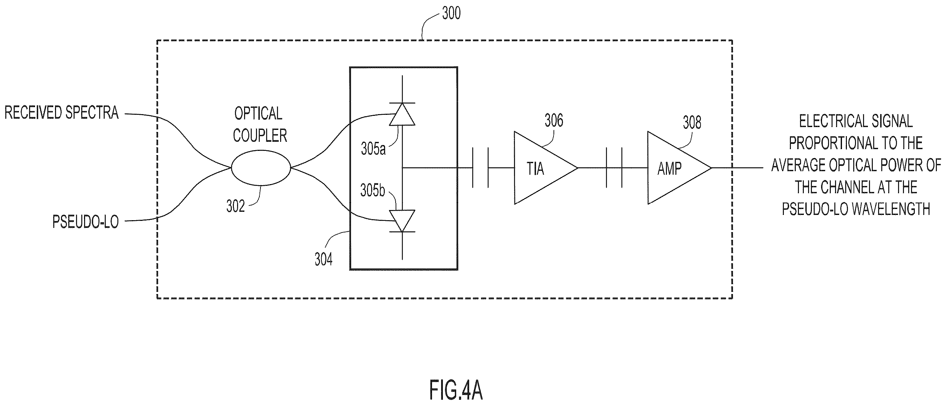

Reference is now made to FIG. 4A, which illustrates a block diagram of an intradyne detector 300 that may be used for the intradyne detectors 242w and 242p shown in FIG. 3. The intradyne detector 300 shown in FIG. 4A includes an optical coupler 302, a balanced photodetector 304 comprised of photodiodes 305a and 305b, a transimpedance amplifier (TIA) 306 and a post amplifier 308. The optical coupler 302 mixes the received spectra with the pseudo-LO signal and the balanced photodetector 304 generates a balanced (differential) signal at baseband that is capacitively coupled to the TIA 306 and then to the post amplifier 308. The output of the intradyne detector 300 at the post amplifier 308 is an electrical signal that is near baseband and is related to the average power of the channel of interest. Notably, there is no need to detect the symbols and/or decode the bits to obtain the information needed to make the protection switch decision.

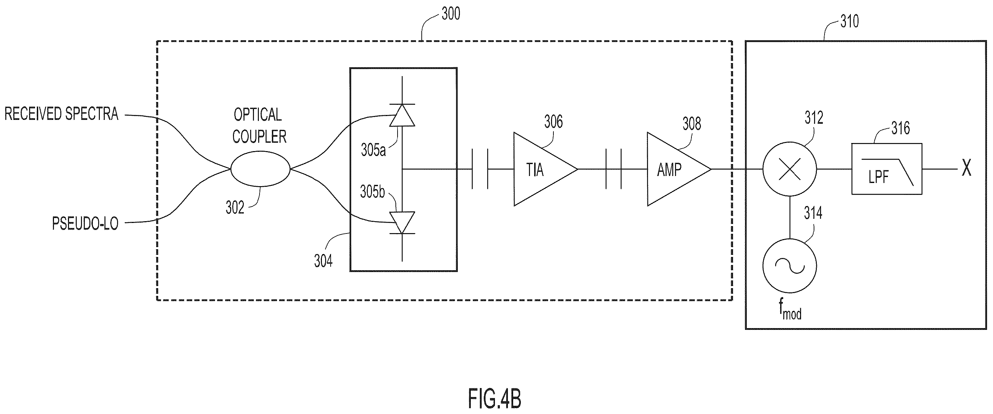

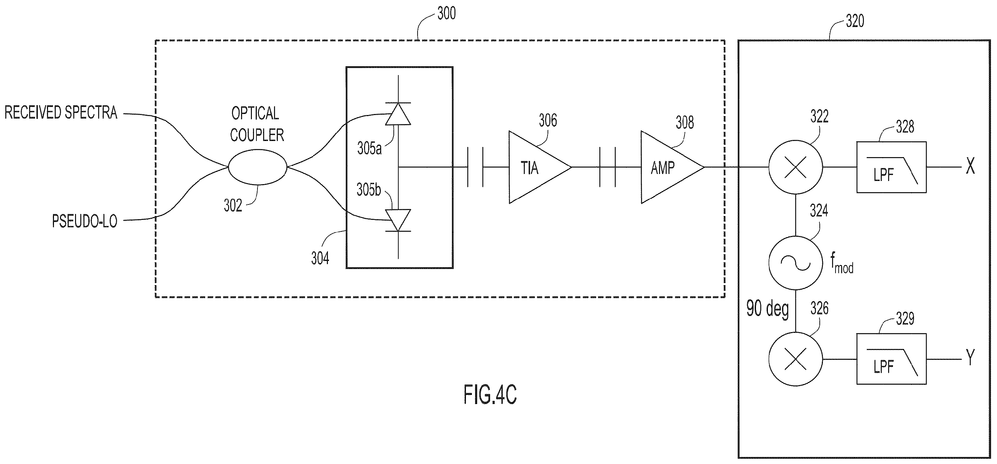

Reference is now made to FIGs. 4B and 4C. These figures show different forms of lock-in detection schemes for converting the output of the intradyne detector 300 to baseband. A lock-in detection scheme can focus on a particular region of the (near) baseband signal for improved sensitivity to the signal of interest. Generally, lock-in detection schemes involve homodyne detection and low-pass filtering to measure a signal's amplitude and phase relative to a periodic reference. Lock-in detection extracts signals at a defined frequency band around the reference frequency, efficiently rejecting all other frequency components.

FIG. 4B shows a lock-in detection circuit 310 that is connected to the output of the post amplifier 308. The lock-in detection circuit 310 includes a mixer 312, an oscillator 314 and a low pass filter (LPF) 316. The lock-in detection circuit 310 takes the electrical signal (at near baseband) from the output of the post amplifier 308 and converts it to baseband. The oscillator 314 outputs to the mixer 312 an oscillator signal at a modulation frequency (e.g., 100 kHz). The mixer 312 mixes the near baseband electrical signal from the post amplifier 308 with the oscillator signal at frequency *f_{mod}* and outputs a baseband signal. The LPF 316 low-pass filters the baseband signal output by the mixer 312 to output an in-phase component signal, denoted X in FIG. 4B.

FIG. 4C illustrates another lock-in detection circuit 320 that uses a dual-phase configuration. Specifically, the lock-in detection circuit 320 includes a first mixer 322 (for an in-phase component), an oscillator 324 that outputs an oscillator signal at frequency *f_{mod},* a second mixer 326 that receives an 90-degree phase-shifted version of the oscillator signal, a first LPF 328 and a second LPF 329. The first mixer 322 mixes the electrical signal output by the post amplifier 308 with the oscillator signal and the first LPF 328 filters the output of the first mixer 322 to produce an in-phase component signal X. Similarly, the second mixer 326 mixes the electrical signal output by the post amplifier 308 with the 90-degree phase-shifted version of the oscillator signal, and the second LPF 329 filters the output of the second mixer 326 to output an 90-degree phase-shifted (also called quadrature) component signal Y.

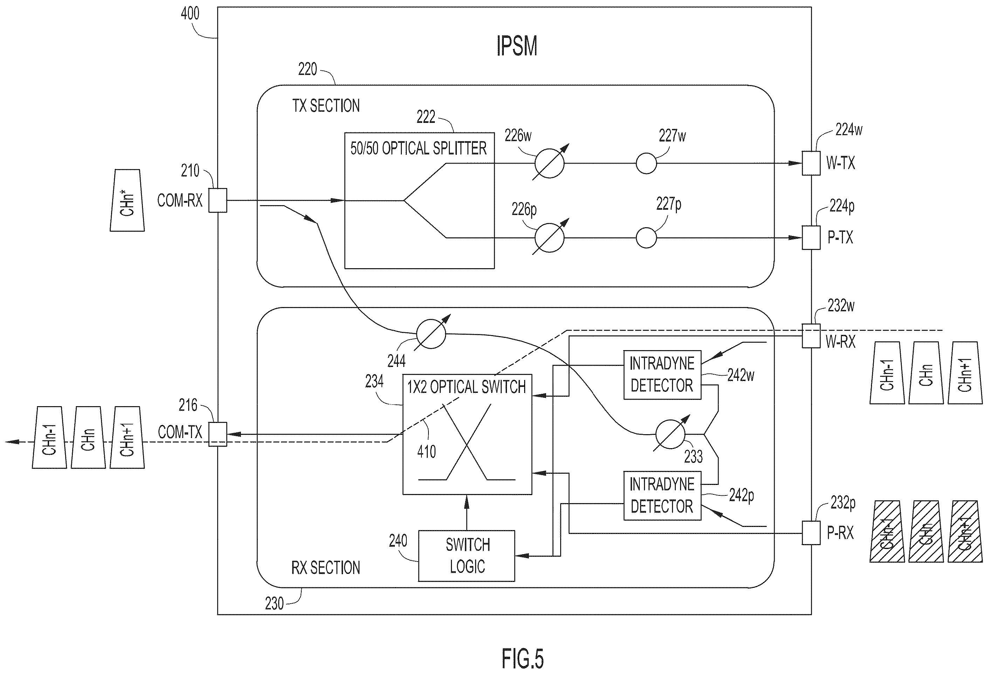

FIGs. 5 - 7, described below, illustrate an operational example based on the intradyne signal detection mechanism, considering for example, a 3 channel WDM spectrum: CHn, CHn-1, CHn+1. Although a three-channel system is shown below, schematically, this method can be extended to that of many channels. The example also refers to the "pseudo-LO" option of the IPSM (as shown in FIGs. 3 and 4), but it applies also to the case with real LO shown in FIG. 2

The specific IPSM 400 shown in FIG. 5 is configured to protect against the failure of CHn that is present in the spectra at the Working (W-RX) and Protection (P-RX) ports 232w and 232p. A channel at the same wavelength (central optical frequency) (CHn*) is also present at the COM-RX port to be transmitted on 2 different paths towards the far-end site where a similar IPSM is present.

A portion of the channel CHn* is "tapped" from the TX section 220, split into 2 parts of equal power (via 50/40 optical splitter 22) and mixed with the 2 replica spectra received at the W-RX and P-RX ports by the intradyne detectors 242w and 242p, respectively. As a result of the beating in the intradyne detectors 242w and 242p, two optical signals with power level proportional to the product CHn x CHn* are generated and detected. The electrical signals resulting from the detectors are provided to the switch logic 240 where a proper threshold level (Thr) can be defined above which the channel CHn is considered valid. To avoid saturation at the photodetector, the pseudo-LO may include a VOA 233.

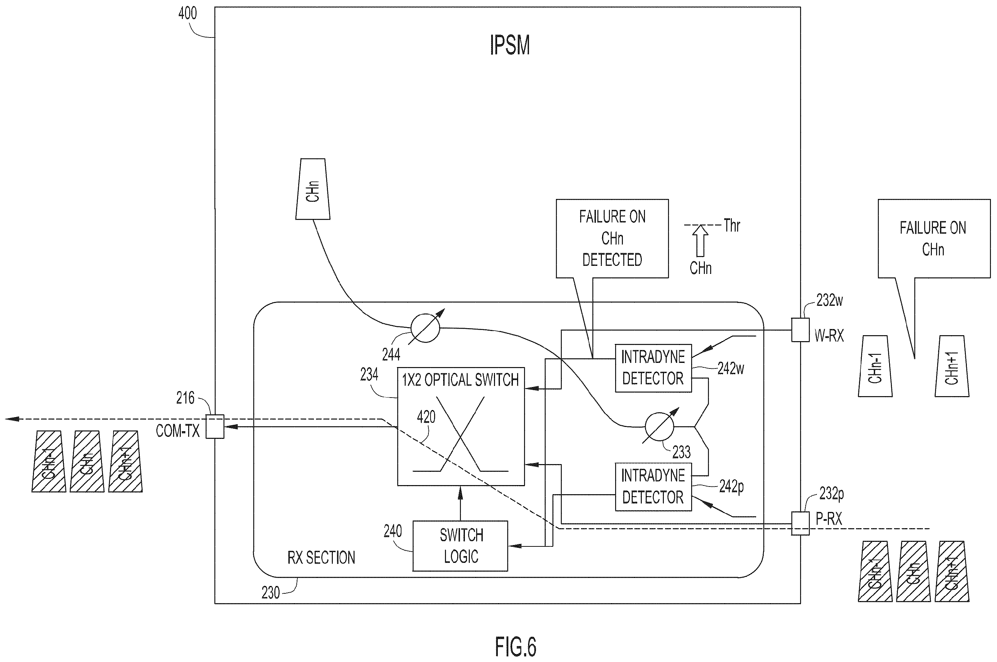

As shown in FIG. 5, initially, the optical switch 234 selects the optical spectra present on the W-RX port 232w. This is shown by the dotted path at reference numeral 410. However, as shown in FIG. 6, if the output of intradyne detector 242w drops below the threshold, this means that the spectrum present on P-RX port has a CHn replica that is not of sufficient strength (not "healthy") and therefore the switch logic 240 triggers the protection on the optical switch 234 to protect the CHn (i.e., it forwards the spectrum present on P-RX port 232p to the COM-TX port) 216. This is shown by the dotted path at reference numeral 420 in FIG. 6.

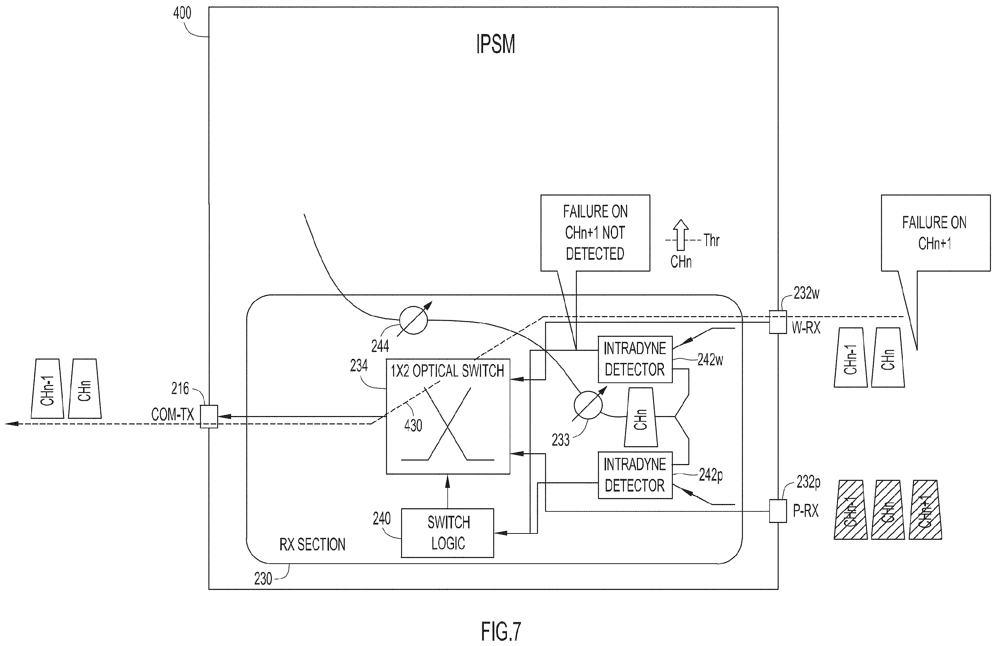

In a different situation shown in FIG. 7, a failure of channel CHn+1 at the W-RX port 232w does not result in any variation of the beating in the intradyne detector 242w that receives a pseudo-LO at CHn, and the power level at CHn remains above the threshold. As a result, the switch logic 240 does not trigger any protection as shown at reference numeral 430 in FIG. 7.

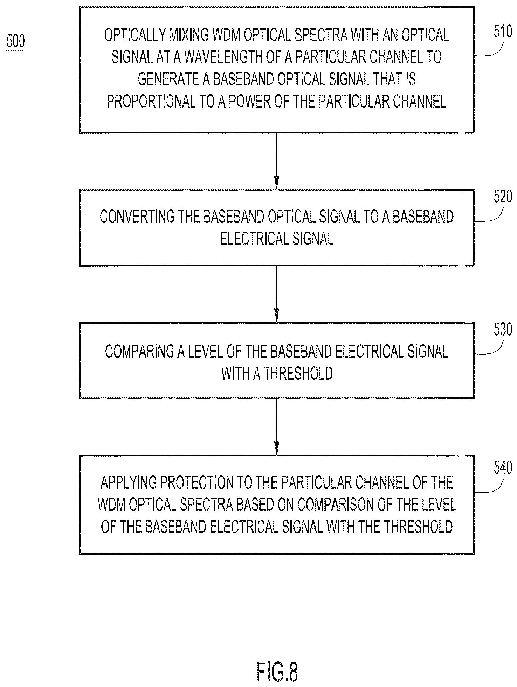

Reference is now made to FIG. 8. FIG. 8 illustrates a flow chart depicting a method 500 according to an example embodiment. The method 500 is performed by an optical node for determining whether protection is to be triggered for a particular channel in a WDM optical spectra comprising a plurality of channels. The method includes, at step 510, optically mixing the WDM optical spectra with an optical signal at a wavelength of a particular channel to generate a baseband optical signal that is proportional to a power of the particular channel. At step 520, the method includes converting the baseband optical signal to a baseband electrical signal. At step 530, the method includes comparing a level of the baseband electrical signal with a threshold. At step 540, the method includes applying protection to the particular channel of the WDM optical spectra based on comparison of the level of the baseband electrical signal with the threshold.

In one example embodiment, the optical signal that is mixed with the WDM optical spectra is generated by a local optical oscillator at an optical receiver in the optical node, the local optical oscillator being tuned to the wavelength of the particular channel to be protected. In another example embodiment, the optical signal that is mixed with the WDM optical spectra is obtained (tapped) from a transmitter section of the optical node.

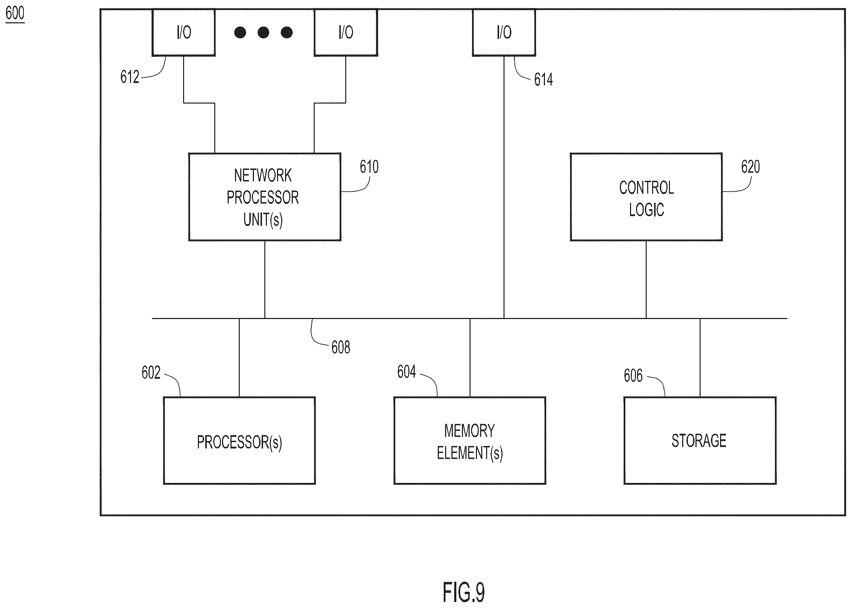

Referring to FIG. 9, FIG. 9 illustrates a hardware block diagram of a device 600 that may perform functions associated with operations discussed herein in connection with the techniques presented herein. In various embodiments, a computing device or apparatus, such as device 600 or any combination of devices 600, may be configured as any entity/entities as discussed for the techniques depicted presented herein in order to perform operations of the various techniques discussed herein. The device 600 may represent an optical node that includes the intradyne protection switch module in accordance with the embodiments presented herein.

In at least one embodiment, the device 600 may be any apparatus that may include one or more processor(s) 602, one or more memory element(s) 604, storage 606, a bus 608, one or more network processor unit(s) 610 interconnected with one or more network input/output (I/O) interface(s) 612, one or more I/O interface(s) 614, and control logic 620. In various embodiments, instructions associated with logic for device 600 can overlap in any manner and are not limited to the specific allocation of instructions and/or operations described herein.

In at least one embodiment, processor(s) 602 is/are at least one hardware processor configured to execute various tasks, operations and/or functions for device 600 as described herein according to software and/or instructions configured for device 600. Processor(s) 602 (e.g., a hardware processor) can execute any type of instructions associated with data to achieve the operations detailed herein. In one example, processor(s) 602 can transform an element or an article (e.g., data, information) from one state or thing to another state or thing. Any of potential processing elements, microprocessors, digital signal processor, baseband signal processor, modem, PHY, controllers, systems, managers, logic, and/or machines described herein can be construed as being encompassed within the broad term 'processor'.

In at least one embodiment, memory element(s) 604 and/or storage 606 is/are configured to store data, information, software, and/or instructions associated with device 600, and/or logic configured for memory element(s) 604 and/or storage 606. For example, any logic described herein (e.g., control logic 620) can, in various embodiments, be stored for device 600 using any combination of memory element(s) 604 and/or storage 606. Note that in some embodiments, storage 606 can be consolidated with memory element(s) 604 (or vice versa), or can overlap/exist in any other suitable manner.

In at least one embodiment, bus 608 can be configured as an interface that enables one or more elements of device 600 to communicate in order to exchange information and/or data. Bus 608 can be implemented with any architecture designed for passing control, data and/or information between processors, memory elements/storage, peripheral devices, and/or any other hardware and/or software components that may be configured for device 600. In at least one embodiment, bus 608 may be implemented as a fast kernel-hosted interconnect, potentially using shared memory between processes (e.g., logic), which can enable efficient communication paths between the processes.

In various embodiments, network processor unit(s) 610 may enable communication between device 600 and other systems, entities, etc., via network I/O interface(s) 612 (wired and/or wireless) to facilitate operations discussed for various embodiments described herein. In various embodiments, network processor unit(s) 610 can be configured as a combination of hardware and/or software, such as one or more Ethernet driver(s) and/or controller(s) or interface cards, Fibre Channel (e.g., optical) driver(s) and/or controller(s), wireless receivers/ transmitters/transceivers, baseband processor(s)/modem(s), and/or other similar network interface driver(s) and/or controller(s) now known or hereafter developed to enable communications between device 600 and other systems, entities, etc. to facilitate operations for various embodiments described herein. In various embodiments, network I/O interface(s) 612 can be configured as one or more Ethernet port(s), Fibre Channel ports, optical network ports (as shown in FIGs. 1A, 1B, 2, 3, 4A - 4C and 5 - 7 for the intradyne protection switch modules presented herein) any other I/O port(s), and/or antenna(s)/antenna array(s) now known or hereafter developed. Thus, the network processor unit(s) 610 and/or network I/O interface(s) 612 may include suitable interfaces for receiving, transmitting, and/or otherwise communicating data and/or information in a network environment.

I/O interface(s) 614 allow for input and output of data and/or information with other entities that may be connected to device 600. For example, I/O interface(s) 614 may provide a connection to external devices such as a keyboard, keypad, a touch screen, and/or any other suitable input and/or output device now known or hereafter developed. In some instances, external devices can also include portable computer readable (non-transitory) storage media such as database systems, thumb drives, portable optical or magnetic disks, and memory cards. In still some instances, external devices can be a mechanism to display data to a user, such as, for example, a computer monitor, a display screen, or the like.

In various embodiments, control logic 620 can include instructions that, when executed, cause processor(s) 602 to perform operations, which can include, but not be limited to, providing overall control operations of computing device; interacting with other entities, systems, etc. described herein; maintaining and/or interacting with stored data, information, parameters, etc. (e.g., memory element(s), storage, data structures, databases, tables, etc.); combinations thereof; and/or the like to facilitate various operations for embodiments described herein.

The programs described herein (e.g., control logic 620) may be identified based upon application(s) for which they are implemented in a specific embodiment. However, it should be appreciated that any particular program nomenclature herein is used merely for convenience; thus, embodiments herein should not be limited to use(s) solely described in any specific application(s) identified and/or implied by such nomenclature.

In various embodiments, any entity or apparatus as described herein may store data/information in any suitable volatile and/or non-volatile memory item (e.g., magnetic hard disk drive, solid state hard drive, semiconductor storage device, random access memory (RAM), read only memory (ROM), erasable programmable read only memory (EPROM), application specific integrated circuit (ASIC), etc.), software, logic (fixed logic, hardware logic, programmable logic, analog logic, digital logic), hardware, and/or in any other suitable component, device, element, and/or object as may be appropriate. Any of the memory items discussed herein should be construed as being encompassed within the broad term 'memory element'. Data/information being tracked and/or sent to one or more entities as discussed herein could be provided in any database, table, register, list, cache, storage, and/or storage structure: all of which can be referenced at any suitable timeframe. Any such storage options may also be included within the broad term 'memory element' as used herein.

Note that in certain example implementations, operations as set forth herein may be implemented by logic encoded in one or more tangible media that is capable of storing instructions and/or digital information and may be inclusive of non-transitory tangible media and/or non-transitory computer readable storage media (e.g., embedded logic provided in: an ASIC, digital signal processing (DSP) instructions, software [potentially inclusive of object code and source code], etc.) for execution by one or more processor(s), and/or other similar machine, etc. Generally, memory element(s) 604 and/or storage 606 can store data, software, code, instructions (e.g., processor instructions), logic, parameters, combinations thereof, and/or the like used for operations described herein. This includes memory element(s) 604 and/or storage 606 being able to store data, software, code, instructions (e.g., processor instructions), logic, parameters, combinations thereof, or the like that are executed to carry out operations in accordance with teachings of the present disclosure.

In some instances, software of the present embodiments may be available via a non-transitory computer useable medium (e.g., magnetic or optical mediums, magneto-optic mediums, CD-ROM, DVD, memory devices, etc.) of a stationary or portable program product apparatus, downloadable file(s), file wrapper(s), object(s), package(s), container(s), and/or the like. In some instances, non-transitory computer readable storage media may also be removable. For example, a removable hard drive may be used for memory/storage in some implementations. Other examples may include optical and magnetic disks, thumb drives, and smart cards that can be inserted and/or otherwise connected to a computing device for transfer onto another computer readable storage medium.

In some aspects, the techniques described herein relate to a method performed in an optical node for determining whether protection is to be triggered for a particular channel in a wavelength division multiplexed (WDM) optical spectra including a plurality of channels, the method including: optically mixing the WDM optical spectra with an optical signal at a wavelength of the particular channel to generate a baseband optical signal that is proportional to a power of the particular channel; converting the baseband optical signal to a baseband electrical signal; comparing a level of the baseband electrical signal with a threshold; and applying protection to the particular channel of the WDM optical spectra based on comparison of the level of the baseband electrical signal with the threshold.

In some aspects, the techniques described herein relate to a method, wherein applying protection includes applying protection to the particular channel with the level of the baseband electrical signal does not exceed the threshold, and otherwise, not applying protection for the particular channel when the level of the baseband electrical signal exceeds the threshold.

In some aspects, the techniques described herein relate to a method, wherein the optical signal that is mixed with the WDM optical spectra is a local oscillator signal generated by a local optical oscillator tuned to the wavelength of the particular channel.

In some aspects, the techniques described herein relate to a method, wherein: optically mixing includes mixing, using a first optical mixer, first WDM spectra received on a working receiver port with the local oscillator signal to generate a first baseband optical signal, and mixing, using a second optical mixer, second WDM spectra received on a protection receiver port with the local oscillator signal to generate a second baseband optical signal; converting includes converting the first baseband optical signal to a first baseband electrical signal and converting the second baseband optical signal to a second baseband electrical signal; comparing includes the first baseband electrical signal to a threshold, and the method further including: selecting the second WDM spectra for output when the first baseband electrical signal is less than the threshold indicating the particular channel is to be protected, and otherwise selecting the first WDM spectra for output.

In some aspects, the techniques described herein relate to a method, wherein the optical signal that is mixed with the WDM optical spectra is a tapped optical signal that is tapped from a transmitter section of the optical node.

In some aspects, the techniques described herein relate to a method, wherein: optically mixing includes mixing, with a first intradyne detector, first WDM spectra received on a working receiver port with the tapped optical signal to generate a first baseband optical signal, and mixing with a second optical intradyne detector, second WDM spectra received on a protection receiver port with the tapped optical signal to generate a second baseband optical signal; converting includes converting the first baseband optical signal to a first baseband electrical signal and converting the second baseband optical signal to a second baseband electrical signal; comparing includes the first baseband electrical signal to a threshold, and the method further including: selecting the second WDM spectra for output when the first baseband electrical signal is less than the threshold indicating the particular channel is to be protected, and otherwise selecting the first WDM spectra for output.

In some aspects, the techniques described herein relate to a method, wherein converting the baseband optical signal to the baseband electrical signal uses a lock-in detection scheme, and further including analyzing a particular region of the baseband electrical signal for improved sensitivity to a signal of interest.

In some aspects, the techniques described herein relate to an optical device including: an optical transmitter section having an input port to receive optical signals to be transmitted to a remote optical device; and an optical receiver section having an input port to receive wavelength division multiplexed (WDM) optical spectra, the optical receiver section configured to: mix the WDM optical spectra with an optical signal at a wavelength of a particular channel to generate a baseband optical signal that is proportional to a power of the particular channel; convert the baseband optical signal to a baseband electrical signal; compare a level of the baseband electrical signal with a threshold to determine whether the particular channel is to be protected; and apply protection to the particular channel of the WDM optical spectra based on comparison of the level of the baseband electrical signal with the threshold.

In some aspects, the techniques described herein relate to an optical device, wherein the optical receiver section includes a logic circuit configured to compare the baseband electrical signal with the threshold, and to generate an output to apply protection for the particular channel when the level of the baseband electrical signal does not exceed the threshold.

In some aspects, the techniques described herein relate to an optical device, wherein the optical receiver section includes: a working input port to receive from a first optical fiber, first WDM spectra that is mixed with the optical signal to produce a first baseband optical signal; a protection input port to receive from a second optical fiber, second WDM spectra that is mixed with the optical signal to produce a second baseband optical signal; an optical switch configured to receive as input the first WDM spectra and the second WDM spectra, and to select, based on a control input, for output to an output port of the optical receiver section, either the first WDM spectra or the second WDM spectra; and a logic circuit configured to receive as input a first baseband electrical signal derived from the first baseband optical signal, and to compare the first baseband electrical signal with a threshold to generate as output a selection control based on whether a level of the first baseband electrical signal is greater than the threshold, the selection control being provided to the control input of the optical switch to cause the optical switch to select for output the second WDM spectra when the level of the first baseband electrical signal is not greater than the threshold.

In some aspects, the techniques described herein relate to an optical device, further including a local optical oscillator configured to generate the optical signal that is mixed with the WDM optical spectra, the local optical oscillator being tuned to the wavelength of the particular channel.

In some aspects, the techniques described herein relate to an optical device, wherein the optical signal that is mixed with the WDM optical spectra is a tapped optical signal that is tapped from the optical transmitter section.

In some aspects, the techniques described herein relate to an optical device, wherein the optical receiver section includes: a first intradyne detector configured to mix first WDM spectra received on a working input port with the tapped optical signal to generate a first baseband optical signal; a second intradyne detector configured to mix second WDM spectra received on a protection input port with the tapped optical signal to generate a second baseband optical signal; an optical switch configured to receive as input the first WDM spectra and the second WDM spectra, and to select, based on a control input, for output to an output port of the optical receiver section, either the first WDM spectra or the second WDM spectra; and a logic circuit configured to receive as input a first baseband electrical signal derived from the first baseband optical signal, and to compare the first baseband electrical signal with a threshold to generate as output a selection control based on whether a level of the first baseband electrical signal is greater than the threshold, the selection control being provided to the control input of the optical switch to cause the optical switch to select for output the second WDM spectra when the level of the first baseband electrical signal is not greater than the threshold.

In some aspects, the techniques described herein relate to an optical device including: an optical transmitter section having an input port to receive optical signals to be transmitted to a remote optical device; and an optical receiver section including: an output port; a first intradyne detector configured to mix first WDM spectra received on a working input port with an optical signal at a wavelength of a particular channel to generate a first optical signal; a second intradyne detector configured to mix second WDM spectra received on a protection input port with the optical signal to generate a second optical signal; logic configured to compare a first electrical signal derived from the first optical signal with a threshold to generate as output a selection control based on whether a level of the first electrical signal is greater than the threshold; and an optical switch configured to receive as input the first WDM spectra and the second WDM spectra, and to select, based on the selection control input, for output to the output port, either the first WDM spectra or the second WDM spectra.

In some aspects, the techniques described herein relate to an optical device, wherein the selection control causes the optical switch to select for output the second WDM spectra when the level of the first electrical signal is not greater than the threshold, and to otherwise select for output the first WDM spectra.

In some aspects, the techniques described herein relate to an optical device, further including a local optical oscillator configured to generate the optical signal that is used for mixing by the first intradyne detector and the second intradyne detector, the local optical oscillator being tuned to the wavelength of the particular channel.

In some aspects, the techniques described herein relate to an optical device, wherein the optical signal that is used for mixing by the first intradyne detector and the second intradyne detector is a tapped optical signal that is tapped from the optical transmitter section.

In some aspects, the techniques described herein relate to an optical device, wherein the first intradyne detector and the second intradyne detector include: an optical coupler configured to receive the optical signal and to mix WDM spectra with the optical signal; a balanced photodetector coupled to the optical coupler to generate a balanced electrical signal; a transimpedance amplifier coupled to receive the balanced electrical signal from the balanced photodetector to output an amplified signal; and a post amplifier coupled to receive the amplified signal from the transimpedance amplifier and to output a further amplified electrical signal that is near baseband and related to an average power of the particular channel.

In some aspects, the techniques described herein relate to an optical device, wherein the optical receiver section further includes: an oscillator that outputs an electrical oscillator signal at a modulation frequency; a mixer coupled to receive the further amplified electrical signal output by the post amplifier, to mix the further amplified electrical signal with the electrical oscillator signal to output a baseband electrical signal; and a low pass filter that filters the baseband electrical signal to output an in-phase component signal.

In some aspects, the techniques described herein relate to an optical device, wherein the optical receiver section further includes: an oscillator that outputs a first electrical oscillator signal and a second electrical oscillator signal at a modulation frequency, the second electrical oscillator signal being 90 degrees out of phase with respect to the first electrical oscillator signal; a first mixer coupled to receive the further amplified electrical signal output by the post amplifier, to mix the further amplified electrical signal with the first electrical oscillator signal to output a first baseband electrical signal; a first low pass filter that filters the first baseband electrical signal to output an in-phase component signal; a second mixer coupled to receive the further amplified electrical signal output by the post amplifier, to mix the further amplified electrical signal with the second electrical oscillator signal to output a second baseband electrical signal; and a second low pass filter that filters the second baseband electrical signal to output an quadrature component signal.

### Variations and Implementations

Embodiments described herein may include one or more networks, which can represent a series of points and/or network elements of interconnected communication paths for receiving and/or transmitting messages (e.g., packets of information) that propagate through the one or more networks. These network elements offer communicative interfaces that facilitate communications between the network elements. A network can include any number of hardware and/or software elements coupled to (and in communication with) each other through a communication medium. Such networks can include, but are not limited to, any local area network (LAN), virtual LAN (VLAN), wide area network (WAN) (e.g., the Internet), software defined WAN (SD-WAN), wireless local area (WLA) access network, wireless wide area (WWA) access network, metropolitan area network (MAN), Intranet, Extranet, virtual private network (VPN), Low Power Network (LPN), Low Power Wide Area Network (LPWAN), Machine to Machine (M2M) network, Internet of Things (IoT) network, Ethernet network/switching system, any other appropriate architecture and/or system that facilitates communications in a network environment, and/or any suitable combination thereof.

Networks through which communications propagate can use any suitable technologies for communications including wireless communications (e.g., 4G/5G/nG, IEEE 802.11 (e.g., Wi-Fi^{®}/Wi-Fi6^{®}), IEEE 802.16 (e.g., Worldwide Interoperability for Microwave Access (WiMAX)), Radio-Frequency Identification (RFID), Near Field Communication (NFC), Bluetooth^{™}, mm.wave, Ultra-Wideband (UWB), etc.), and/or wired communications (e.g., T1 lines, T3 lines, digital subscriber lines (DSL), Ethernet, Fibre Channel, etc.). Generally, any suitable means of communications may be used such as electric, sound, light, infrared, and/or radio to facilitate communications through one or more networks in accordance with embodiments herein. Communications, interactions, operations, etc. as discussed for various embodiments described herein may be performed among entities that may directly or indirectly connected utilizing any algorithms, communication protocols, interfaces, etc. (proprietary and/or non-proprietary) that allow for the exchange of data and/or information.

Communications in a network environment can be referred to herein as 'messages', 'messaging', 'signaling', 'data', 'content', 'objects', 'requests', 'queries', 'responses', 'replies', etc. which may be inclusive of packets. As referred to herein and in the claims, the term 'packet' may be used in a generic sense to include packets, frames, segments, datagrams, and/or any other generic units that may be used to transmit communications in a network environment. Generally, a packet is a formatted unit of data that can contain control or routing information (e.g., source and destination address, source and destination port, etc.) and data, which is also sometimes referred to as a 'payload', 'data payload', and variations thereof. In some embodiments, control or routing information, management information, or the like can be included in packet fields, such as within header(s) and/or trailer(s) of packets. Internet Protocol (IP) addresses discussed herein and in the claims can include any IP version 4 (IPv4) and/or IP version 6 (IPv6) addresses.

To the extent that embodiments presented herein relate to the storage of data, the embodiments may employ any number of any conventional or other databases, data stores or storage structures (e.g., files, databases, data structures, data or other repositories, etc.) to store information.

Note that in this Specification, references to various features (e.g., elements, structures, nodes, modules, components, engines, logic, steps, operations, functions, characteristics, etc.) included in 'one embodiment', 'example embodiment', 'an embodiment', 'another embodiment', 'certain embodiments', 'some embodiments', 'various embodiments', 'other embodiments', 'alternative embodiment', and the like are intended to mean that any such features are included in one or more embodiments of the present disclosure, but may or may not necessarily be combined in the same embodiments. Note also that a module, engine, client, controller, function, logic or the like as used herein in this Specification, can be inclusive of an executable file comprising instructions that can be understood and processed on a server, computer, processor, machine, compute node, combinations thereof, or the like and may further include library modules loaded during execution, object files, system files, hardware logic, software logic, or any other executable modules.

It is also noted that the operations and steps described with reference to the preceding figures illustrate only some of the possible scenarios that may be executed by one or more entities discussed herein. Some of these operations may be deleted or removed where appropriate, or these steps may be modified or changed considerably without departing from the scope of the presented concepts. In addition, the timing and sequence of these operations may be altered considerably and still achieve the results taught in this disclosure. The preceding operational flows have been offered for purposes of example and discussion. Substantial flexibility is provided by the embodiments in that any suitable arrangements, chronologies, configurations, and timing mechanisms may be provided without departing from the teachings of the discussed concepts.

As used herein, unless expressly stated to the contrary, use of the phrase 'at least one of, 'one or more of, 'and/or', variations thereof, or the like are open-ended expressions that are both conjunctive and disjunctive in operation for any and all possible combination of the associated listed items. For example, each of the expressions 'at least one of X, Y and Z', 'at least one of X, Y or Z', 'one or more of X, Y and Z', 'one or more of X, Y or Z' and 'X, Y and/or Z' can mean any of the following: 1) X, but not Y and not Z; 2) Y, but not X and not Z; 3) Z, but not X and not Y; 4) X and Y, but not Z; 5) X and Z, but not Y; 6) Y and Z, but not X; or 7) X, Y, and Z.

Each example embodiment disclosed herein has been included to present one or more different features. However, all disclosed example embodiments are designed to work together as part of a single larger system or method. This disclosure explicitly envisions compound embodiments that combine multiple previously-discussed features in different example embodiments into a single system or method.

Additionally, unless expressly stated to the contrary, the terms 'first', 'second', 'third', etc., are intended to distinguish the particular nouns they modify (e.g., element, condition, node, module, activity, operation, etc.). Unless expressly stated to the contrary, the use of these terms is not intended to indicate any type of order, rank, importance, temporal sequence, or hierarchy of the modified noun. For example, 'first X' and 'second X' are intended to designate two 'X' elements that are not necessarily limited by any order, rank, importance, temporal sequence, or hierarchy of the two elements. Further as referred to herein, 'at least one of and 'one or more of can be represented using the '(s)' nomenclature (e.g., one or more element(s)).

One or more advantages described herein are not meant to suggest that any one of the embodiments described herein necessarily provides all of the described advantages or that all the embodiments of the present disclosure necessarily provide any one of the described advantages. Numerous other changes, substitutions, variations, alterations, and/or modifications may be ascertained to one skilled in the art and it is intended that the present disclosure encompass all such changes, substitutions, variations, alterations, and/or modifications as falling within the scope of the appended claims.

## Claims

1. A method performed in an optical node for determining whether protection is to be triggered for a particular channel in a wavelength division multiplexed (WDM) optical spectra comprising a plurality of channels, the method comprising:
optically mixing the WDM optical spectra with an optical signal at a wavelength of the particular channel to generate a baseband optical signal that is proportional to a power of the particular channel;
converting the baseband optical signal to a baseband electrical signal;
comparing a level of the baseband electrical signal with a threshold; and
applying protection to the particular channel of the WDM optical spectra based on comparison of the level of the baseband electrical signal with the threshold.

2. The method of claim 1, wherein one or more of:
A) applying protection comprises applying protection to the particular channel with the level of the baseband electrical signal does not exceed the threshold, and otherwise, not applying protection for the particular channel when the level of the baseband electrical signal exceeds the threshold;
B) converting the baseband optical signal to the baseband electrical signal uses a lock-in detection scheme, and further comprising analyzing a particular region of the baseband electrical signal for improved sensitivity to a signal of interest.

3. The method of claim 1 or 2, wherein the optical signal that is mixed with the WDM optical spectra is a local oscillator signal generated by a local optical oscillator tuned to the wavelength of the particular channel,
optionally wherein:
optically mixing comprises mixing, using a first optical mixer, first WDM spectra received on a working receiver port with the local oscillator signal to generate a first baseband optical signal, and mixing, using a second optical mixer, second WDM spectra received on a protection receiver port with the local oscillator signal to generate a second baseband optical signal;
converting comprises converting the first baseband optical signal to a first baseband electrical signal and converting the second baseband optical signal to a second baseband electrical signal;
comparing comprises the first baseband electrical signal to a threshold, and the method further comprising:
selecting the second WDM spectra for output when the first baseband electrical signal is less than the threshold indicating the particular channel is to be protected, and otherwise selecting the first WDM spectra for output.

4. The method of any preceding claim, wherein the optical signal that is mixed with the WDM optical spectra is a tapped optical signal that is tapped from a transmitter section of the optical node,
optionally wherein:
optically mixing comprises mixing, with a first intradyne detector, first WDM spectra received on a working receiver port with the tapped optical signal to generate a first baseband optical signal, and mixing with a second optical intradyne detector, second WDM spectra received on a protection receiver port with the tapped optical signal to generate a second baseband optical signal;
converting comprises converting the first baseband optical signal to a first baseband electrical signal and converting the second baseband optical signal to a second baseband electrical signal;
comparing comprises the first baseband electrical signal to a threshold,
the method further comprising:
selecting the second WDM spectra for output when the first baseband electrical signal is less than the threshold indicating the particular channel is to be protected, and otherwise selecting the first WDM spectra for output.

5. An optical device comprising:
an optical transmitter section having an input port to receive optical signals to be transmitted to a remote optical device; and
an optical receiver section having an input port to receive wavelength division multiplexed (WDM) optical spectra, the optical receiver section configured to:
mix the WDM optical spectra with an optical signal at a wavelength of a particular channel to generate a baseband optical signal that is proportional to a power of the particular channel;
convert the baseband optical signal to a baseband electrical signal;
compare a level of the baseband electrical signal with a threshold to determine whether the particular channel is to be protected; and
apply protection to the particular channel of the WDM optical spectra based on comparison of the level of the baseband electrical signal with the threshold.

6. The optical device of claim 5, wherein the optical receiver section comprises a logic circuit configured to compare the baseband electrical signal with the threshold, and to generate an output to apply protection for the particular channel when the level of the baseband electrical signal does not exceed the threshold.

7. The optical device of claim 5 or 6, wherein the optical receiver section comprises:
a working input port to receive from a first optical fiber, first WDM spectra that is mixed with the optical signal to produce a first baseband optical signal;
a protection input port to receive from a second optical fiber, second WDM spectra that is mixed with the optical signal to produce a second baseband optical signal;
an optical switch configured to receive as input the first WDM spectra and the second WDM spectra, and to select, based on a control input, for output to an output port of the optical receiver section, either the first WDM spectra or the second WDM spectra; and
a logic circuit configured to receive as input a first baseband electrical signal derived from the first baseband optical signal, and to compare the first baseband electrical signal with a threshold to generate as output a selection control based on whether a level of the first baseband electrical signal is greater than the threshold, the selection control being provided to the control input of the optical switch to cause the optical switch to select for output the second WDM spectra when the level of the first baseband electrical signal is not greater than the threshold.

8. The optical device of any of claims 5 to 7, further comprising a local optical oscillator configured to generate the optical signal that is mixed with the WDM optical spectra, the local optical oscillator being tuned to the wavelength of the particular channel.

9. The optical device of any of claims 5 to 8, wherein the optical signal that is mixed with the WDM optical spectra is a tapped optical signal that is tapped from the optical transmitter section,
optionally wherein the optical receiver section comprises:
a first intradyne detector configured to mix first WDM spectra received on a working input port with the tapped optical signal to generate a first baseband optical signal;
a second intradyne detector configured to mix second WDM spectra received on a protection input port with the tapped optical signal to generate a second baseband optical signal;
an optical switch configured to receive as input the first WDM spectra and the second WDM spectra, and to select, based on a control input, for output to an output port of the optical receiver section, either the first WDM spectra or the second WDM spectra; and
a logic circuit configured to receive as input a first baseband electrical signal derived from the first baseband optical signal, and to compare the first baseband electrical signal with a threshold to generate as output a selection control based on whether a level of the first baseband electrical signal is greater than the threshold, the selection control being provided to the control input of the optical switch to cause the optical switch to select for output the second WDM spectra when the level of the first baseband electrical signal is not greater than the threshold.

10. An optical device comprising:
an optical transmitter section having an input port to receive optical signals to be transmitted to a remote optical device; and
an optical receiver section comprising:
an output port;
a first intradyne detector configured to mix first WDM spectra received on a working input port with an optical signal at a wavelength of a particular channel to generate a first optical signal;
a second intradyne detector configured to mix second WDM spectra received on a protection input port with the optical signal to generate a second optical signal;
logic configured to compare a first electrical signal derived from the first optical signal with a threshold to generate as output a selection control based on whether a level of the first electrical signal is greater than the threshold; and
an optical switch configured to receive as input the first WDM spectra and the second WDM spectra, and to select, based on the selection control input, for output to the output port, either the first WDM spectra or the second WDM spectra.

11. The optical device of claim 10, wherein one or more of:
A) the selection control causes the optical switch to select for output the second WDM spectra when the level of the first electrical signal is not greater than the threshold, and to otherwise select for output the first WDM spectra;
B) the optical signal that is used for mixing by the first intradyne detector and the second intradyne detector is a tapped optical signal that is tapped from the optical transmitter section;
C) the method further comprises a local optical oscillator configured to generate the optical signal that is used for mixing by the first intradyne detector and the second intradyne detector, the local optical oscillator being tuned to the wavelength of the particular channel.

12. The optical device of claim 10 or 11, wherein the first intradyne detector and the second intradyne detector comprise:
an optical coupler configured to receive the optical signal and to mix WDM spectra with the optical signal;
a balanced photodetector coupled to the optical coupler to generate a balanced electrical signal;
a transimpedance amplifier coupled to receive the balanced electrical signal from the balanced photodetector to output an amplified signal; and
a post amplifier coupled to receive the amplified signal from the transimpedance amplifier and to output a further amplified electrical signal that is near baseband and related to an average power of the particular channel.

13. The optical device of claim 12, wherein the optical receiver section further includes:
an oscillator that outputs an electrical oscillator signal at a modulation frequency;
a mixer coupled to receive the further amplified electrical signal output by the post amplifier, to mix the further amplified electrical signal with the electrical oscillator signal to output a baseband electrical signal; and
a low pass filter that filters the baseband electrical signal to output an in-phase component signal.

14. The optical device of claim 12 or 13, wherein the optical receiver section further includes:
an oscillator that outputs a first electrical oscillator signal and a second electrical oscillator signal at a modulation frequency, the second electrical oscillator signal being 90 degrees out of phase with respect to the first electrical oscillator signal;
a first mixer coupled to receive the further amplified electrical signal output by the post amplifier, to mix the further amplified electrical signal with the first electrical oscillator signal to output a first baseband electrical signal;
a first low pass filter that filters the first baseband electrical signal to output an in-phase component signal;
a second mixer coupled to receive the further amplified electrical signal output by the post amplifier, to mix the further amplified electrical signal with the second electrical oscillator signal to output a second baseband electrical signal; and
a second low pass filter that filters the second baseband electrical signal to output an quadrature component signal.

15. A method performed at an optical device, the method comprising:
mixing, by a first intradyne detector of the optical device, first WDM spectra received on a working input port with an optical signal at a wavelength of a particular channel to generate a first optical signal;
mixing, by a second intradyne detector of the optical device, second WDM spectra received on a protection input port with the optical signal to generate a second optical signal;
comparing a first electrical signal derived from the first optical signal with a threshold to generate as output a selection control based on whether a level of the first electrical signal is greater than the threshold; and
an optical switch of the optical device receiving as input the first WDM spectra and the second WDM spectra, and selecting, based on the selection control input, for output to an output port of the optical device, either the first WDM spectra or the second WDM spectra.
